Europäisches Patentamt

(19) European Patent Office

Office européen des brevets

(11) Numéro de publication : **0 127 702**
**B1**

(12) **FASCICULE DE BREVET EUROPÉEN**

(45) Date de publication du fascicule du brevet :
27.05.87

(21) Numéro de dépôt : **83200952.6**

(22) Date de dépôt : **16.03.82**

(60) Numéro de publication de la demande initiale en application de l'article 76 CBE : **0088857**

(51) Int. Cl.⁴ : **B 60 T 11/34**

(54) **Valve régulatrice de freinage.**

(43) Date de publication de la demande :
**12.12.84 Bulletin 84/50**

(45) Mention de la délivrance du brevet :
**27.05.87 Bulletin 87/22**

(84) Etats contractants désignés :
**DE FR GB SE**

(56) Documents cités :
**DE-A- 2 329 148**
**FR-A- 2 113 958**
**FR-A- 2 295 858**
**GB-A- 2 054 076**

(73) Titulaire : **BENDIX ITALIA S.p.A.**
**Via Cavalli 53 A Casella Postale 66**
**I-26013 Crema (IT)**

(72) Inventeur : **Cadeddu, Leonardo**
**Via Piacenza 29**
**I-26013 Crema (IT)**

(74) Mandataire : **Poidatz, Emmanuel et al**
**Service Brevets Bendix 44 rue François 1er**
**F-75008 Paris (FR)**

## Description

La présente invention concerne une valve régulatrice de freinage destinée à être interposée dans un circuit hydraulique de freinage entre un maître-cylindre et les moteurs de freins de certaines roues d'un véhicule automobile.

Il a été proposé des valves régulatrices de freinage comportant un boîtier muni d'un alésage dans lequel coulisse un piston dont une extrémité sépare une chambre de sortie, adjacente au fond de l'alésage, d'une chambre d'entrée et dont l'autre extrémité sépare la chambre d'entrée de l'extérieur de l'alésage, ledit piston étant sollicité par un dispositif de commande vers l'intérieur de l'alésage dans une position de repos, un passage de fluide entre les chambres s'étendant dans ledit piston et des moyens formant une valve dans ledit passage pour couper la communication entre les deux chambres lorsque le piston s'est déplacé à partir de sa position de repos d'une distance prédéterminée.

Dans la valve régulatrice de freinage décrite dans le brevet FR-A-2 383 048 et dans le préambule de la revendication 1 le moyen formant valve est constitué par un clapet sphérique sollicité par un ressort en appui étanche sur un siège de petit diamètre réalisé dans le piston. Bien que cette valve fonctionne correctement, elle présente un inconvénient résultant du fait que le siège possède une section efficace qui bien que faible, reste non négligeable et entraîne un phénomène d'hystérésis dans le fonctionnement de la valve régulatrice de freinage.

Le document FR-A-2 295 858 décrit une valve régulatrice de freinage dans laquelle une projection fixe du boîtier reçoit à coulissement dans un alésage un piston comportant un canal reliant une chambre d'entrée à une chambre de sortie à travers un passage interne dans le piston. La projection fixe comporte des passages radiaux entre la chambre d'entrée et l'alésage qui sont en position de chevauchement avec des passages radiaux dans le piston quand le piston est dans une position prédéterminée relative à la projection fixe. Ce dispositif ne concerne pas une valve régulatrice sensible à la charge du véhicule et présente, de plus, l'inconvénient qu'il ne comporte pas de moyen de clapet qui permettrait le passage de fluide rapide de la chambre de sortie vers la chambre d'entrée lors du relâchement de la pression de freinage.

L'invention a pour but de proposer une valve régulatrice de freinage asservie à la charge du véhicule où les moyens formant valve présentent vis-à-vis du piston une section efficace sensiblement nulle, et où le retour de fluide, lors d'un relâchement de la pression de freinage, est facilité.

A cet effet, l'invention propose une valve régulatrice de freinage asservie à la charge d'un véhicule comportant un boîtier muni d'un alésage dans lequel coulisse un piston dont une extrémité sépare une chambre de sortie, adjacente au fond de l'alésage, d'une chambre d'entrée et dont l'autre extrémité sépare la chambre d'entrée de l'extérieur de l'alésage, ledit piston étant sollicité par un dispositif de commande vers l'intérieur de l'alésage dans une position de repos, un passage de fluide entre les chambres s'étendant dans ledit piston et des moyens formant valve dans ledit passage pour couper la communication entre les deux chambres lorsque le piston s'est déplacé à partir de sa position de repos d'une distance prédéterminée, la valve régulatrice de freinage étant caractérisée en ce que lesdits moyens formant valve sont définis par la structure suivante : le piston comporte un alésage interne dont une extrémité débouche dans la chambre de sortie et dont l'autre extrémité communique avec l'extérieur du boîtier, ledit alésage interne est monté coulissant de façon étanche sur l'extrémité libre d'une projection fixe du boîtier, ladite projection comporte un canal reliant la chambre de sortie à une gorge annulaire réalisée sur la périphérie de la projection, des passages radiaux à travers le piston étant prévus entre la chambre d'entrée et l'alésage interne pour être en position de chevauchement avec ladite gorge tant que le déplacement du piston à partir de sa position de repos est inférieur à ladite distance prédéterminée, le piston comportant à son autre extrémité une gorge périphérique susceptible d'être placée entre les deux chambres après montage du piston dans le boîtier, ladite gorge comportant un joint d'étanchéité annulaire faisant clapet anti-retour et permettant le passage de fluide de la chambre de sortie vers la chambre d'entrée.

L'invention est maintenant décrite en se référant aux dessins dans lesquels :

la figure 1 présente une vue en coupe partielle d'un dispositif de butée pour une commande mécanique de la valve régulatrice, selon l'invention, incorporée dans un circuit hydraulique de freinage ;

la figure 2 présente une vue en coupe partielle selon la ligne A-A de la figure 1 ;

la figure 3 est une vue en coupe agrandie de la valve régulatrice de freinage, selon l'invention, représentée figure 1 ; et

la figure 4 représente un graphe illustrant la variation du coefficient d'adhérence longitudinal CA en fonction du glissement G d'une roue freinée sur un sol d'adhérence limite constante.

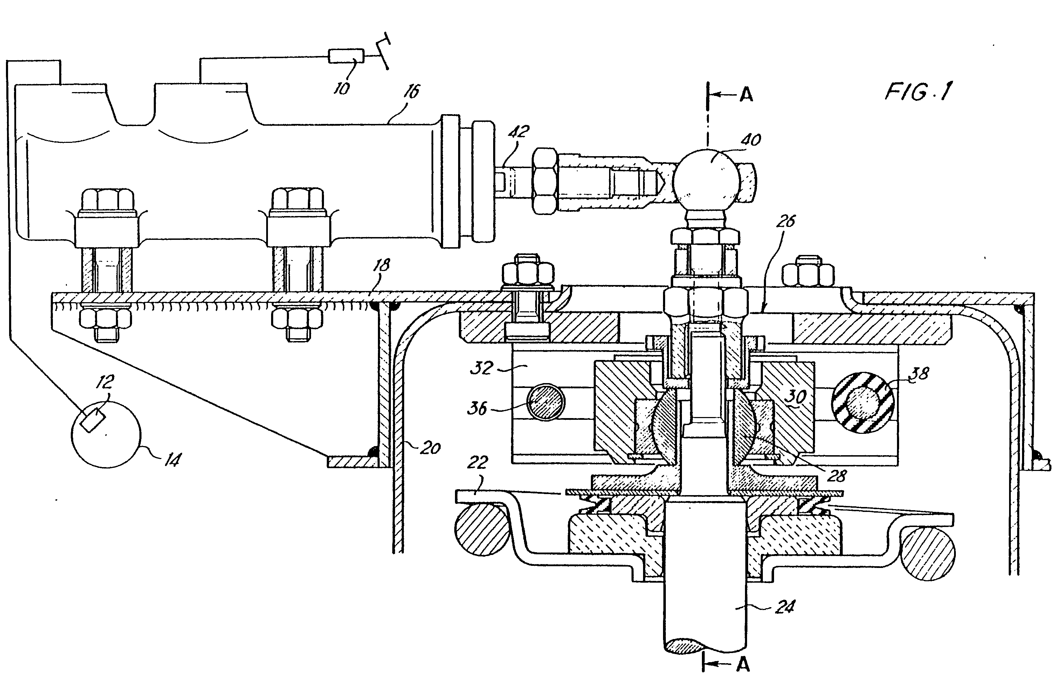

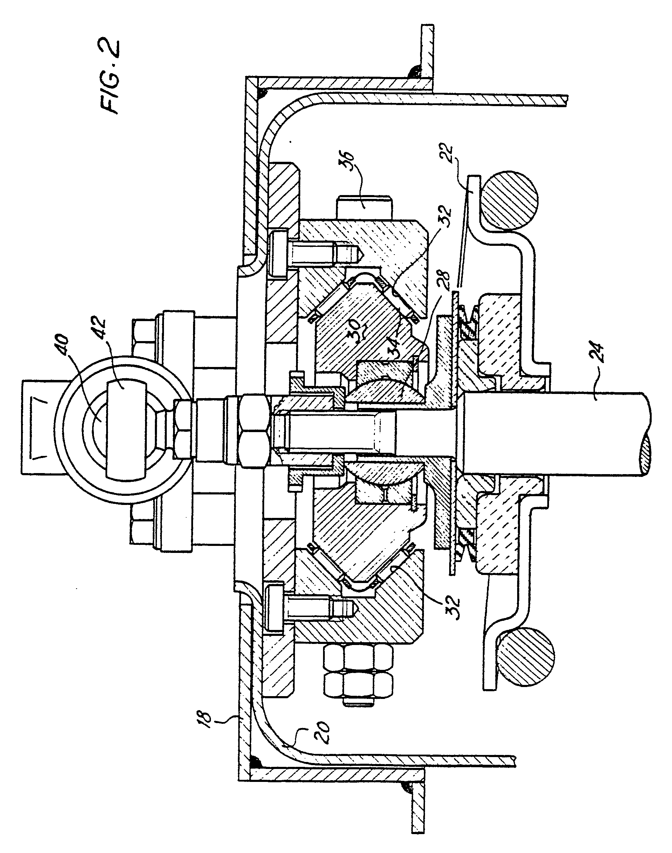

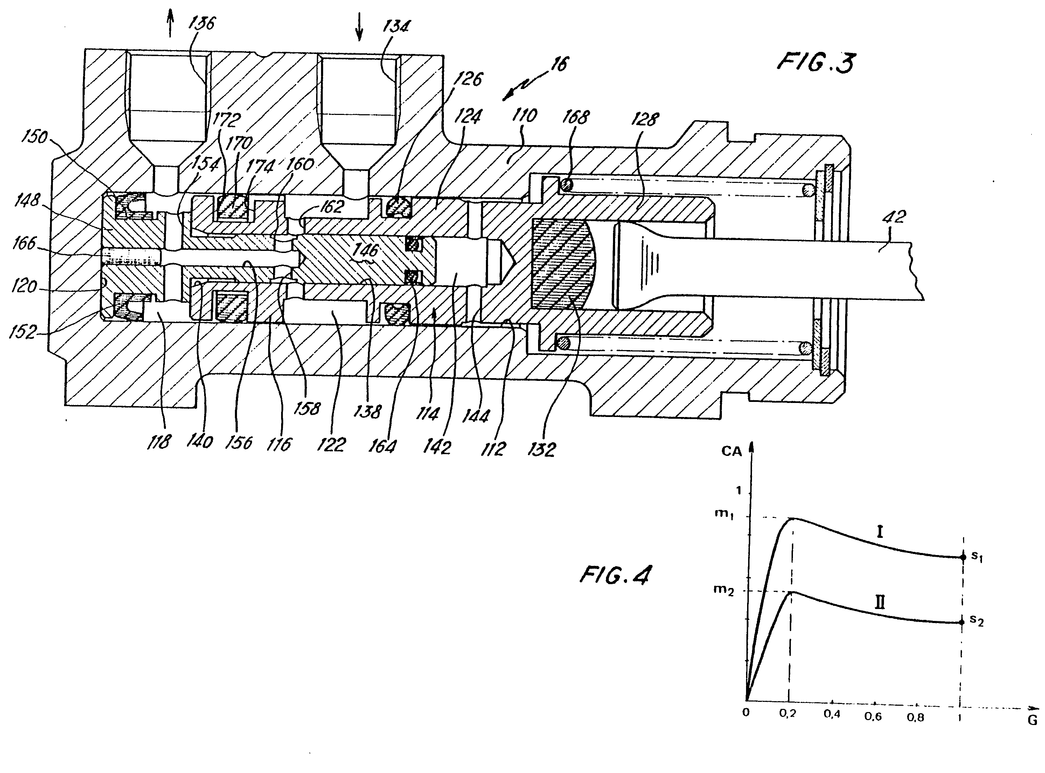

Si l'on considère la figure 1 on a représenté schématiquement un circuit hydraulique de freinage avec un maître-cylindre 10, qui peut avantageusement être remplacé par toute autre source de pression hydraulique de freinage, un jeu de moteurs de frein 12 associé à une roue 14 du véhicule, et une valve régulatrice de freinage 16 disposée entre le maître-cylindre et le jeu de moteurs de freins et qui est représentée en coupe figure 3. La valve 16 est montée sur un bâti 18 lui-même fixé par des boulons 19 sur un dôme en tôle 20, solidaire du châssis du véhicule. La roue 14 est associée au châssis du véhicule par un dispositif classique de suspension comportant des moyens élastiques en particulier un ressort hélicoïdal 21 dont une extrémité (représentée partiellement) vient en appui sur une coupelle 22 et un amortisseur télescopique dont seule l'extrémité suspendue 24 adjacente au châssis est visible. L'extrémité 24 est associée au châssis du véhicule par l'intermédiaire d'un dispositif de butée 26 représenté en coupe sur la figure et qui va être décrit plus en détail maintenant en se référant également à la figure 2. L'extrémité 24 est montée par l'intermédiaire d'une rotule 28 sur un plateau 30 lui-même monté coulissant entre deux glissières en V 32 montées en vis-à-vis sur un disque support 33 lui-même fixé par des boulons 19 au dôme 20. Les deux glissières 32 s'étendent de façon parallèle à l'axe longitudinal du véhicule de telle sorte que le déplacement du plateau 30 ne peut se produire que dans cette direction. Pour améliorer le coulissement il est prévu deux jeux de rouleaux 34 disposés sur chacune des branches du V des glissières 32. L'assemblage est complété par deux goujons 36, 37 reliant rigidement les deux glissières, le goujon 37 adjacent à la partie avant du véhicule étant partiellement recouvert d'un amortisseur caoutchouté 38 servant de butée avant au plateau 30. L'extrémité 24 suspendue de l'amortisseur se termine par une rotule 40 solidaire d'une tige de poussée 42 par une liaison de longueur réglable 41. La tige de poussée 42 est destinée à contrôler le fonctionnement de la valve régulatrice de freinage, selon l'invention, qui va être décrit maintenant en se référant à la figure 3.

La valve régulatrice de freinage représentée sur la figure 3 comporte un boîtier 110 dans lequel est réalisé un alésage 112 dans lequel coulisse un piston 114. Le piston 114 a une première extrémité 116 coulissant dans l'alésage 112 pour séparer une chambre de sortie 118 adjacente au fond 120 du boîtier d'une chambre d'entrée 122. Le piston 114 comporte une autre extrémité 124 se projetant vers l'extérieur du boîtier et qui comporte d'une part un joint d'étanchéité 126 disposé entre la chambre d'entrée 122 et l'atmosphère et d'autre part une projection cylindrique 128 disposée à l'extérieur de l'alésage et dans laquelle est susceptible de coulisser la tige 142. Une butée de caoutchouc 132 disposée entre le piston 114 et la tête de la tige 142 fait office d'amortisseur. La chambre 122 est reliée par l'intermédiaire de l'orifice d'entrée 134 au maître-cylindre 110 tandis que la chambre de sortie 118 est reliée par l'orifice de sortie 136 au jeu de moteurs de frein 112. Le piston 114 comporte de plus un alésage interne 138 dont une extrémité 140 débouche dans la chambre de sortie 118 et dont l'autre extrémité 142 communique par des passages 144 avec l'extérieur de l'alésage 112. L'alésage 138 est monté coulissant sur l'extrémité libre d'une projection 146 maintenue fixe par rapport au boîtier. Dans le mode de réalisation ici décrit, la projection 146 est solidaire d'une pièce rapportée au boîtier présentant une tête épanouie 148 maintenue en appui sur le fond de l'alésage 120 et qui présente à sa partie périphérique une gorge 150 dans laquelle est montée une coupelle à lèvre 152 dont la lèvre se projette vers l'intérieur de la chambre de sortie. Cette coupelle à lèvre 152 a pour but de maintenir la tête 148 plaquée contre le fond de l'alésage 120 lors des opérations de freinage par action de la pression régnant dans la chambre 118. La projection 146 comporte un certain nombre de passages 154, 156 et 158 reliant la chambre de sortie 118 à une gorge 160 prévue sur la périphérie de la projection 146 et susceptible de chevaucher, lorsque le piston occupe sa position de repos telle que représentée sur la figure 3, avec des passages radiaux 162 réalisés dans le piston 114 entre la chambre d'entrée 122 et l'alésage interne 138. L'extrémité libre de la projection 146 comporte un joint d'étanchéité 164 pour isoler la gorge 160 de l'extérieur de l'alésage 112 et l'extrémité libre du passage 158 est bouchée par un bouchon 166. Un ressort de rappel 168 disposé entre le piston 114 et une butée fixe par rapport au boîtier sollicite le piston 114 en butée contre le boîtier plus exactement contre la projection 146 dans sa position de repos telle que représentée sur la figure 3. Entre les deux chambres 118 et 122 est disposé un joint annulaire d'étanchéité 170 coulissant sur l'alésage 112 et faisant office de clapet anti-retour permettant le passage de fluide de la chambre de sortie 118 vers la chambre d'entrée 122 lors du relâchement de la pression de freinage. A cet effet, le joint 170 de section sensiblement rectangulaire est monté dans une gorge 172 prévue sur la partie périphérique de l'extrémité 116 du piston 114, la gorge 172 présentant une largeur axiale légèrement supérieure à la largeur du joint 170 et un diamètre minimum inférieur au diamètre interne du joint 170. Pour faciliter l'écoulement de fluide on a réalisé sur l'extrémité 116 plusieurs entailles 174. Selon une variante le joint rectangulaire 170 est remplacé par une coupelle à lèvre semblable à la coupelle 152 et dont la lèvre se projette vers la chambre d'entrée 122.

La valve régulatrice de freinage ici décrite est du type limiteur de pression pour lequel les sections efficaces des deux extrémités 116 et 124 du piston 114 sont égales. Par ailleurs, il est à noter que compte tenu du fait que la communication entre les deux chambres 118 et 122 est obtenue par coulissement du piston 114 sur la projection 146 jusqu'à obturation des passages 162, les moyens formant valve ainsi définis présentent une section efficace sensiblement nulle par rapport au piston 114.

Le circuit de freinage qui vient d'être décrit fonctionne de la façon suivante :

Le circuit de freinage étant au repos et le véhicule se déplaçant à vitesse constante sur un sol qui pour l'instant est supposé d'adhérence constante, la valve régulatrice est dans sa position de repos telle que représentée figure 3 où le passage de fluide entre les orifices 134 et 136 est ouvert. Par ailleurs, la tige 42 vient en appui contre la butée caoutchoutée 132 et l'autre correspondant à l'appui du plateau 30 sur la butée caoutchoutée 38. Le fait de laisser un jeu entre la tige 42 et la butée 132 est important car il permet d'assurer l'ouverture de la valve régulatrice lors du début du freinage et de ne pas retarder alors la mise en œuvre des moteurs de frein 12. Lorsque le conducteur sollicite la pédale du maître-cylindre, la pression monte dans la chambre d'entrée 122 et le piston 114 est sollicité vers la droite de la figure 3. Le ressort de rappel 168 est en général d'un tarage faible mais suffisant pour s'assurer que la fermeture de la valve ne puisse intervenir qu'après l'établissement d'une faible pression de freinage (2 à 3 kg/cm²) dans le moteur 12 suffisante pour rattraper les jeux de la mécanique du frein correspondant. Par son déplacement vers la gauche de la figure 3, le piston 114 va être soumis à une force de réaction transmise par la tige 42 qui est sensiblement proportionnelle au couple d'adhérence de la roue 14. En effet dès l'établissement d'une faible pression de freinage, les conditions d'adhérence de la roue freinée du véhicule sur le sol vont se modifier de telle sorte qu'un léger glissement de la roue va apparaître et que la roue va être soumise à un couple de réaction dit couple d'adhérence qui à l'inertie près de la roue du véhicule est absorbé par le couple de freinage agissant sur cette même roue. Il en résulte l'apparition de force de réaction sur la suspension reliant la roue freinée au châssis du véhicule. Grâce au dispositif de butée à un seul degré de liberté 26 les composantes verticales et transversales de ces forces sont absorbées par le châssis du véhicule tandis qu'une force proportionnelle à la composante longitudinale de ces forces de réaction est transmise à la tige 42. Il en résulte que lors d'une décélération du véhicule la tige 42 est sollicitée vers la gauche de la figure 3 et est susceptible de transmettre au piston 114 une force de réaction sensiblement proportionnelle à la force d'adhérence longitudinale agissant sur la roue freinée, force d'adhérence qui multipliée par le rayon de la roue freinée donne la valeur du couple d'adhérence. Pour une adhérence limite déterminée du sol le coefficient d'adhérence CA varie selon une loi bien connue des techniciens du freinage automobile en fonction du glissement G de la roue freinée (le glissement G est donné par le rapport de la différence entre la vitesse du véhicule moins la vitesse de la roue sur la vitesse du véhicule). Cette variation est illustrée sur la figure 4 où l'on peut remarquer que le coefficient d'adhérence CA croît rapidement de la valeur zéro jusqu'à atteindre un maximum « M » pour un glissement d'environ 20 % puis décroît jusqu'à atteindre une valeur limite « S » représentative de l'adhérence limite du sol lorsque le glissement G atteint la valeur unité c'est-à-dire lorsque la roue est complètement bloquée. Ainsi donc au début du freinage la caractéristique de la roue se trouve donc sur la partie montante de la courbe d'adhérence « I » et la force de réaction sur la tige 42 va croître et permettre la réouverture de la valve 16 et son maintien de façon à augmenter la pression de freinage dans les moteurs 12. Lorsque la roue freinée menace de bloquer le glissement G de celle-ci va devenir supérieur à la valeur critique pour laquelle le coefficient d'adhérence est maximum « M1 ». Dans ce cas la force de réaction à la tige 42 diminue et le piston 114 se déplace vers la droite de la figure 3 pour, d'une part, couper la communication entre les orifices 134 et 136 et d'autre part, réduire la pression dans la chambre de sortie 118 et dans les moteurs de frein 12. Cette diminution de la pression de freinage entraînera une diminution du glissement G de la roue et donc un retour du coefficient d'adhérence vers sa valeur maximale « M1 » ce qui aura pour effet une nouvelle augmentation de la force de réaction entraînant un déplacement du piston 114 vers la gauche de la figure 3. Il en résulte que pour une adhérence limite déterminée du sol « S1 », le piston-valve va osciller autour d'une position d'équilibre qui détermine dans la chambre de sortie 118 une pression de freinage sensiblement constante. Il est important de remarquer que le circuit de freinage proposé permet, d'une part, d'éviter le blocage de la roue freinée et d'autre part, d'obtenir un freinage avec le maximum d'efficacité en conservant à la roue freinée un léger glissement de l'ordre de 20 % qui correspond à la valeur maximum du coefficient d'adhérence.

Si l'adhérence limite du sol « S » vient à changer brusquement, par exemple à diminuer, la force de réaction diminuera proportionnellement de telle sorte que le piston-valve 114 sera sollicité dans une direction entraînant une réduction de la pression de freinage, et le pilotage du piston se fera d'une façon analogue à celle déjà décrite selon une autre courbe du coefficient d'adhérence correspondant à la nouvelle adhérence correspondant à la nouvelle adhérence du sol (par exemple passage de la courbe « I », à la courbe « II » de la figure 4). Bien sûr, le processus inverse se produit si l'adhérence du sol vient à augmenter.

Pour terminer il faut signaler que le circuit de freinage complet d'un véhicule comporte au moins deux valves régulatrices de freinage associées indépendamment aux roues d'un même essieu afin d'éviter une instabilité lors du freinage. Cet essieu peut être indifféremment l'essieu avant ou l'essieu arrière du véhicule.

**Revendications**

1. Valve régulatrice de freinage asservie à la charge d'un véhicule, comportant un boîtier (110) muni d'un alésage (112) dans lequel coulisse un piston (114) dont une extrémité (116) sépare une chambre de sortie (118), adjacente au fond (120) de l'alésage (112), d'une chambre d'entrée (122) et dont l'autre extrémité (124) sépare la chambre d'entrée (122) de l'extérieur de l'alésage (112), ledit piston (114) étant sollicité par un dispositif de commande (42, 132, 168) vers l'intérieur de l'alésage (112) dans une position de repos, un passage de fluide entre les chambres (118, 122) s'étendant dans ledit piston (114) et des moyens formant valve dans ledit passage pour couper la communication entre les deux chambres (118, 122) lorsque le piston s'est déplacé à partir de sa position de repos d'une distance prédéterminée, la valve régulatrice de freinage étant caractérisée en ce que lesdits moyens formant valve sont définis par la structure suivante : le piston comporte un alésage interne (138) dont une extrémité débouche dans la chambre de sortie (118) et dont l'autre extrémité communique avec l'extérieur du boîtier, ledit alésage interne (138) est monté coulissant de façon étanche sur l'extrémité libre d'une projection fixe (146) du boîtier, ladite projection (146) comporte un canal reliant la chambre de sortie (118) à une gorge annulaire (160) réalisée sur la périphérie de la projection (146), des passages radiaux (162) à travers le piston (114) étant prévus entre la chambre d'entrée (122) et l'alésage interne (138) pour être en position de chevauchement avec ladite gorge (160) tant que le déplacement du piston (114) à partir de sa position de repos est inférieure à ladite distance prédéterminée, le piston (114) comportant à son autre extrémité une gorge périphérique (172) susceptible d'être placée entre les deux chambres (118, 122) après montage du piston dans le boîtier, ladite gorge (172) comportant un joint d'étanchéité annulaire (170) faisant clapet anti-retour et permettant le passage de fluide de la chambre de sortie (118) vers la chambre d'entrée (122).

2. Valve régulatrice de freinage selon la revendication 1, caractérisée en ce que ladite projection (146) est montée sur une pièce rapportée présentant une tête épanouie (148) maintenue en appui sur le fond de l'alésage (112) du boîtier et comportant à sa périphérie une gorge (150) dans laquelle est disposée une coupelle à lèvre (152) dont la lèvre se projette vers ladite chambre de sortie.

3. Valve régulatrice de freinage selon la revendication 1, caractérisée en ce que le joint d'étanchéité annulaire (170) est une coupelle à lèvre dont la lèvre se projette vers la chambre d'entrée (122).

4. Valve régulatrice de freinage selon la revendication 1 ou 3, caractérisée en ce que le joint d'étanchéité annulaire (170) présente une section sensiblement rectangulaire dont la largeur est légèrement inférieure à celle de ladite gorge (160) et un diamètre intérieur légèrement supérieur au diamètre du fond de ladite gorge (160).

5. Valve régulatrice de freinage selon l'une des revendications précédentes caractérisée en ce qu'elle est du type limiteur de pression et que les deux extrémités du piston (114) ont la même section efficace.

## Claims

1. A vehicle load responsive brake regulating valve, comprising a casing (110) provided with a bore (112) slidingly receiving a piston (114), the one end (116) of which separates an outlet chamber (118) adjacent the bottom (120) of the bore (112) from an inlet chamber (122) and the other end (124) of which separates the inlet chamber (122) from the exterior of the bore (112), said piston (114) being biased by a control device (42, 132, 168) towards the interior of the bore (112) into the rest position, a fluid passage between the chambers (118, 112) extending in said piston (114) and valve forming means in said passage for interrupting the communication between the two chambers (118, 122) when the piston is displaced from its rest position for a predetermined distance, the brake regulating valve being characterized in that said valve forming means are defined by the following structure : the piston comprises an internal bore (138), one end of which opens into the outlet chamber (118) and the other end of which communicates with the exterior of the casing, said internal bore (138) is slidingly mounted in fluid-tight manner on the free end of a fixed projection of the casing, said projection (146) comprises a passage connecting the outlet chamber (118) to an annular grove (160) provided on the periphery of the projection (146), radial passages (162) through the piston (114) being provided between the inlet chamber (122) and the internal bore (138) in order to be in a position of overlapping said grove (116) as long as the displacement of the piston (114) from its rest position is less than said predetermined distance, the piston (114) comprising at its other end a peripheral grove (172) adapted to be placed between the two chambers (118, 122) after mounting of the piston in the casing, said grove (172) comprising an annular seal (170) forming a oneway-valve and permitting the passage of fluid from the outlet chamber (118) to the inlet chamber (122).

2. Brake regulating valve according to claim 1, characterized in that said projection (146) is mounted on an extension member presenting an enlarged head (148) maintained in abutment with the bottom of the bore (112) of the casing and comprising at its periphery a grove (150) wherein a lip seal (152) is received, the lip of which projects towards said outlet chamber.

3. Brake regulating valve according to claim 1, characterized in that the annular seal (170) is a lip seal, the lip of which projects towards the inlet chamber (122).

4. Brake regulating valve according to claim 1 or claim 3, characterized in that the annular seal (170) presents a substantially rectangular section having a width slightly smaller than that of said grove (160), and an internal diameter slightly greater than the diameter at the bottom of said grove (160).

5. Brake regulating valve according to any of the preceding claims, characterized in that it is of the pressure limiting type and in that the two ends of the piston (114) are of the same effective cross section.

**Patentansprüche**

1. Fahrzeuglastabhängiges Bremsregelventil mit einem Gehäuse (110), das mit einer Bohrung (112) versehen ist, in welcher ein Kolben (114) gleitet, dessen eines Ende (116) eine Auslaßkammer (118) angrenzend am Boden (120) der Bohrung (112) von einer Einlaßkammer (122) trennt und dessen anderes Ende (124) die Einlaßkammer (122) von der Außenseite der Bohrung (112) trennt, wobei der Kolben (114) von einer Steuervorrichtung (42, 132, 168) in Innenrichtung der Bohrung (112) in eine Ruhestellung vorgespannt wird, einem Strömungskanal zwischen den Kammern (118, 122), der sich im Kolben (144) erstreckt und ventilbildende Mittel in dem Kanal, um die Verbindung zwischen den beiden Kammern (118, 122) zu unterbrechen, wenn der Kolben aus seiner Ruhestellung um eine vorgegebene Strecke verschoben wird, wobei das Bremsregelventil dadurch gekennzeichnet ist, daß die ventilbildenden Mittel durch folgenden Aufbau definiert sind : der Kolben besitzt eine innere Bohrung (138), deren eines Ende in der Auslaßkammer (118) mündet und deren anderes Ende mit der Außenseite des Gehäuses in Verbindung steht, wobei die innere Bohrung (138) abgedichtet auf dem freien Ende eines festgelegten Vorsprunges (146) des Gehäuses gleitet, der Vorsprung (146) weist einen Kanal auf, der die Auslaßkammer (118) mit einer Ringnut (160) verbindet, die am Umfang des Vorsprungs (146) gebildet ist, wobei den Kolben (114) durchquerende radiale Kanäle (162) zwischen der Einlaßkammer (122) und der inneren Bohrung (138) vorgesehen sind, um sich in einer die Ringnut (160) überlappenden Lage zu befinden, solange die Verschiebung des Kolbens (114) aus seiner Ruhestellung kleiner ist als die vorgegebene Strecke, wobei der Kolben (114) an seinem anderen Ende eine Ringnut (172) aufweist, die nach Einsetzen des Kolbens ins Gehäuse zwischen die beiden Kammern (118, 122) positionierbar ist, wobei die besagte Ringnut (172) eine Ringdichtung (170) aufweist, die als Einwegventil wirkt und eine Strömung von der Auslaßkammer (118) zur Einlaßkammer (122) zuläßt.

2. Bremsregelventil nach Anspruch 1, dadurch gekennzeichnet, daß der Vorsprung (146) an einem Ansatzstück angebracht ist, das einen erweiterten Kopf (148) aufweist, der in Anlage mit dem Boden der Bohrung (112) des Gehäuses gehalten wird und an seinem Umfang eine Nut (150) aufweist, in der eine Lippendichtung (152) sitzt, deren Lippe sich zu der Außenkammer hin erstreckt.

3. Bremsregelventil nach Anspruch 1, dadurch gekennzeichnet, daß die Ringdichtung (170) eine Lippendichtung ist, deren Lippe sich zur Einlaßkammer (122) hin erstreckt.

4. Bremsregelventil nach Anspruch 1 oder 3, dadurch gekennzeichnet, daß die Ringdichtung (170) einen im wesentlichen rechteckigen Querschnitt aufweist, dessen Breite geringfügig kleiner ist als die der Ringnut (160) und einen inneren Durchmesser besitzt, der geringfügig größer als der Durchmesser am Boden der Ringnut (160) ist.

5. Bremsregelventil nach einem der vorhergehenden Ansprüche, dadurch gekennzeichnet, daß es ein Druckbegrenzungsventil ist und daß die beiden Enden des Kolbens (114) den gleichen wirksamen Querschnitt haben.

FIG·1

0 127 702

FIG. 2

0 127 702

*FIG.3*

*FIG.4*

0 127 702